## Europäisches Patentamt
## European Patent Office
## Office européen des brevets

(19)

(11) Veröffentlichungsnummer: **0 006 871**
**B1**

(12)

# EUROPÄISCHE PATENTSCHRIFT

(45) Veröffentlichungstag der Patentschrift:
02.06.82

(51) Int. Cl.³: **B 65 G 65/23**, B 60 P 1/20

(21) Anmeldenummer: 78900039.5

(22) Anmeldetag: 07.07.78

(86) Internationale Anmeldenummer:
**PCT/CH 78/00004**

(87) Internationale Veröffentlichungsnummer:
**WO 79/00032 (25.01.79** Gazette 79/2)

(54) **HEBE- UND SENKVORRICHTUNG ZUM KIPPEN EINER LADEFLÄCHE.**

(30) Priorität: **07.07.77 CH 8386/77**

(43) Veröffentlichungstag der Anmeldung:
**23.01.80 Patentblatt 80/2**

(45) Bekanntmachung des Hinweises auf die Patenterteilung:
**02.06.82 Patentblatt 82/22**

(84) Benannte Vertragsstaaten:
**CH DE FR GB SE**

(56) Entgegenhaltungen:
**DE-A-2 113 112**
**FR-A-1 394 049**
**FR-A-1 444 886**
**FR-A-1 545 896**
**FR-A-S 2 144 997**
**GB-A-821 016**
**US-A-1 906 302**
**US-A-2 849 255**
**US-A-3 043 629**
**US-A-3 871 706**
**US-A-4 019 781**
**US-A-4 066 296**

(73) Patentinhaber: **Calabrese Veicoli Industriali S.p.A.,**
**Casella Postale 387, I-70100 Bari (IT)**

(72) Erfinder: **BALTENSPERGER, Eduard,**
**Rotwandstrasse 37, CH-8004 Zürich (CH)**

(74) Vertreter: **Lotti, Giorgio, c/o Ing. Barzano' & Zanardo**
**S.p.A. Via Cernaia 20, I-10122 Torino (IT)**

BUNDESDRUCKEREI BERLIN

# 0 006 871

## Hebe- und Senkvorrichtung zum Kippen einer Ladefläche

Die Erfindung betrifft eine Hebe- und Senkvorrichtung zum Kippen einer Ladefläche, insbesondere für Kastkraftwagen und Anhänger.

Bei Einrichtungen dieser Art legt man besonderen Wert auf eine möglichst einfache Konstruktion und auf die Erreichung einer starken Neigung der Ladefläche (Kippwinkel).

Es ist eine dazu geeignete Vorrichtung (US-A-3 043 629) bekannt, die aus einem Hydraulikzylinder besteht, der zwei mit dem Zylinder scherenartig verbundene, zweiarmige Hebelpaare betätigt. Die freien Enden des einen Hebelpaares sind am Chassis angelenkt, während die freien Enden des anderen Hebelpaares an der Ladefläche angelenkt sind. Ein Ende des Zylinders ist an einer Achse angelenkt, die sich zwischen den beiden Armen eines Hebelpaares befindet, während das andere Ende am zweiten Hebelpaar angelenkt ist. Die freien Enden der beiden Hebelpaare sind abgewinkelt, um je durch Anlenken an das Ende eines steifen Elements aneinander angeschlossen zu werden. Der Abstand zwischen den Gelenkstellen des steifen Elements ist kleiner als der Abstand der Gelenkstellen des Zylinders an den Hebelpaaren.

Diese Vorrichtung hat jedoch den Nachteil, daß mit ihr nur beschränkte Hubhöhen und nicht für alle Fälle ausreichende Kippwinkel erreichbar sind. Zudem kann der Platzbedarf der Vorrichtung in abgesenktem Zustand so groß sein, daß sie nur mit Schwierigkeiten in Lastwagen untergebracht werden kann.

Ein weiters Erfordernis, das bei den bekannten scherenartigen Hebevorrichtungen nicht oder nur ungenügend erreicht wird, besteht darin, daß die größte Hubkraft zu Beginn des Kippvorganges zur Verfügung steht, um die Ladebrücke sicher aus ihren Auflagen, in denen sie für die Straßenfahrt verankert ist, herausheben zu können.

Außerdem stellt die sichere Vermeidung des Überkippens der Ladebrücke ein bisher ungelöstes Problem dar. Wenn zum Beispiel bei teilweise aufgekippter Ladebrücke die Ladung nach hinten rutscht und an der Pendelrücklade hängen bleibt, kann die Ladebrücke das Übergewicht bekommen, bevor die hydraulische Einheit ganz ausgefahren ist, wobei letztere zerstört werden kann. Es ist deshalb notwendig, bei Gefahr des Überkippens der Ladebrücke sofort den Kippwinkel verringern zu können. Diese Möglichkeit besteht jedoch bei den bekannten Hebevorrichtungen nicht, weil diese nur dazu dienen, die Ladebrücke anzuheben, worauf diese, nach dem Abgleiten der Ladung, durch Ablassen des Druckmittels aus der hydraulischen Einheit unter der Wirkung ihres Eigengewichtes in die Ausgangslage zurückkehrt.

Es ist ferner eine Hebevorrichtung mit scherenartig verbundenen Hebelpaaren bekannt, bei welcher zwecks Erreichung eines größeren Öffnungswinkels die Kolbenstange der Zylinder-Kolben-Einheit über je ein pleuelartiges Zwischenglied mit Gelenken mit dem einen Hebelpaar verbunden ist, wobei Verriegelungsmittel vorhanden sind zur temporären Ausschaltung der Gelenke, wenn die Zwischenglieder parallel zur Kolbenstange verlaufen. Die Zylinder-Kolben-Einheit soll vorzugsweise doppelt wirksam sein, um auch das Absenken der Ladebrücke steuern zu können. Eine zuverlässige Steuerung beim Absenkvorgang ist dort jedoch nicht möglich, zumindest nicht im untern Hubbereich, wo die Zwischenglieder nicht parallel zur Kolbenstange verlaufen und deshalb die Verriegelung zwischen den Zwischengliedern und der Kolbenstange aufgehoben ist.

Die Erfindung bezweckt, eine Hebe- und Senkvorrichtung zu schaffen, mittels welcher die Nachteile der bekannten Vorrichtungen vermieden werden und welche die erwähnten Forderungen ohne Nachteile zu erfüllen gestattet.

Die Erfindung geht aus von einer Anordnung gemäß dem Oberbegriff des Anspruchs 1. Hierbei wird die erwähnte Aufgabe erfindungsgemäß durch die im kennzeichnenden Teil des Anspruchs 1 angegebenen Merkmale gelöst.

Gemäß einer vorteilhaften Ausführungsform der erfindungsgemäßen Vorrichtung kann das Verhältnis der Länge der kürzeren Verbindungsglieder zur Länge der längern Verbindungsglieder mindestens 1 : 2, vorzugsweise etwa 1 : 2,5 betragen. Weitere vorteilhafte Ausgestaltungen der Erfindung ergeben sich aus den Unteransprüchen.

Zwei Ausführungsbeispiele der Erfindung sind nachfolgend anhand der Zeichnung näher erläutert. Es zeigen in schematischer Darstellung:

Fig. 1 eine erste Ausführung der erfindungsgemäßen Vorrichtung in vollständig abgesenkter Lage,

Fig. 2 eine Draufsicht eines Teils der Vorrichtung gemäß Fig. 1,

Fig. 3 eine zweite Ausführung der erfindungsgemäßen Vorrichtung in vollständig abgesenkter Lage, und

Fig. 4 eine Seitenansicht der Vorrichtung gemäß Fig. 3 in verschiedenen Hubstellungen I bis IV.

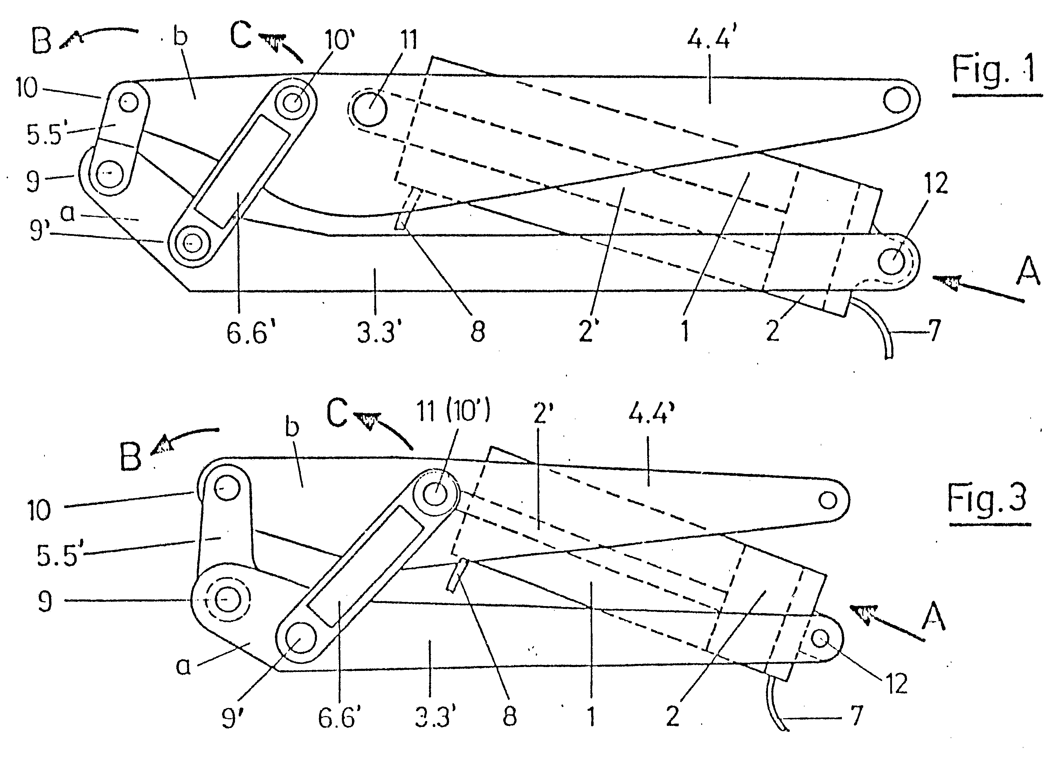

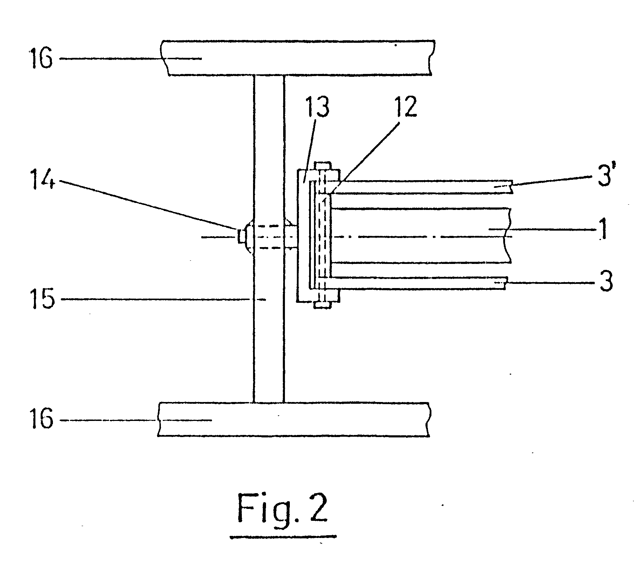

Die Hebe- und Senkvorrichtung gemäß den Fig. 1 und 2 umfaßt einen hydraulischen Druckzylinder 1 mit einem Kolben 2 sowie ein Hebelsystem, bestehend aus den beiden scherenartig verbundenen Hebelpaaren 3, 3' und 4, 4' sowie den Verbindungsgliedern 5, 5' und 6, 6'. Die Hebel jedes Hebelpaares sind flach und verlaufen parallel, wobei in Fig. 1 jeweils nur je ein Hebel jedes Hebelpaares sichtbar ist. Die Zylinder-Kolben-Einheit 1, 2 ist doppelt wirkend, weshalb der Zylinder 1 auf jeder Seite des Kolbens 2 mit einer Leitung 7, 8 für die Zuführung des Druckmittels versehen ist. Die einen Enden der Hebel 3, 3' sind um etwa 45° abgewinkelt und weisen am abgewinkelten Teil a je zwei Bohrungen auf, durch welche je zwei Achsen 9, 9' geführt sind. Die Hebel 4, 4' sind zweiarmig und weisen an dem den Abschnitten a gegenüberliegenden Arm b ebenfalls je zwei Bohrungen auf, durch welche die Achsen 10, 10' geführt sind. Ebenso sind die Verbindungsglieder 5, 5' und 6, 6' an ihren Enden mit Bohrungen versehen, durch welche die genannten Achsen 9, 10 bzw. 9', 10' geführt sind. Mit dem freien Ende der Kolbenstange 2' ist eine quer zu dieser verlaufende Achse 11 verbunden, welche in je eine weitere Bohrung der Hebel 4, 4' eingreift.

Wie auch aus Figur 2 ersichtlich, sind die anderen Enden der Hebel 3, 3' sowie das Ende des Zylinders 1 mit einer Achse 12 verbunden, welche in einem gabelförmigen Träger 13 gelagert ist. Der Träger 13 ist seinerseits am einen Ende eines Wellenzapfens 14 befestigt, welcher senkrecht zur Achse 12 verläuft. Der Wellenzapfen 14 ist drehbar im Querlager 15 eingesetzt, das mit den Längsträgern 16 des Wagengestells verbunden ist. Die freien Enden der Hebel 4, 4' sind in analoger Weise über ein solches Kreuzgelenk mit einem Querträger der Ladebrücke verbunden (nicht dargestellt). Die beschriebene Verbindung ermöglicht es in bekannter Weise, die Ladebrücke sowohl nach der Rückseite wie auch nach der rechten und der linken Längsseite des Fahrzeuges hin zu kippen.

In Figur 3 ist eine weitere Ausführungsform der erfindungsgemäßen Vorrichtung vereinfacht dargestellt, die sich von der Variante nach Figur 1 dadurch unterscheidet, daß auf den Hebeln 4, 4' keine separaten Bohrungen zur Aufnahme von zwei verschiedenen Achsen 10' und 11 vorhanden sind. Die Achse 11 zwischen den beiden Armen des Hebelpaares 4, 4', welche das Ende der Kolbenstange 2' aufnimmt ist hier mit der Achse 10' zur Anlenkung der Verbindungsglieder 6, 6' identisch.

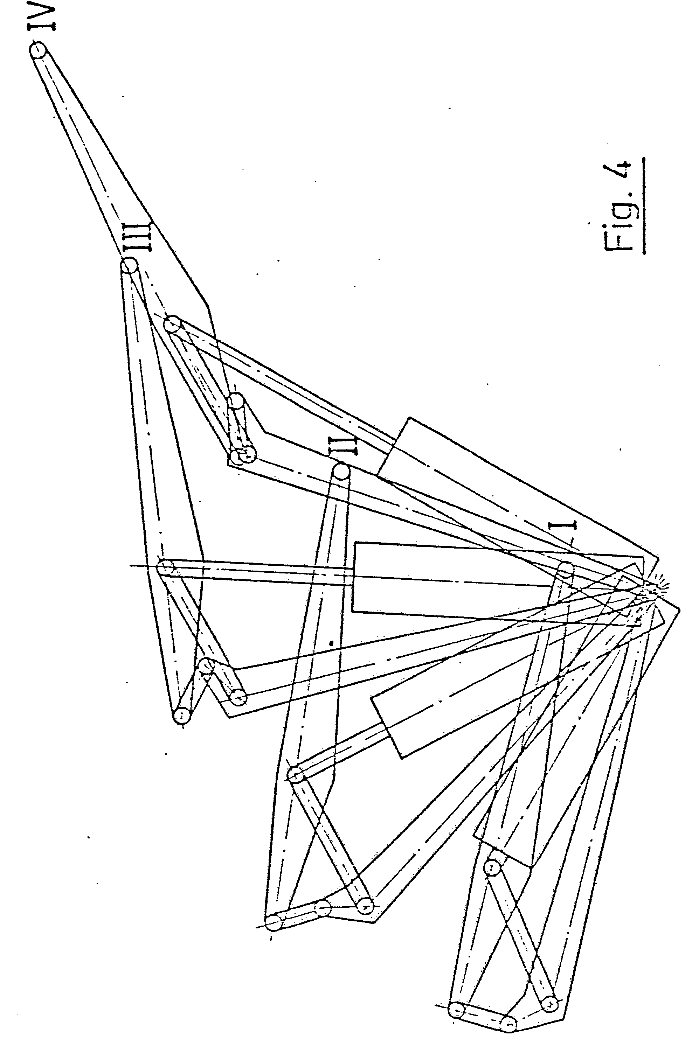

Die Wirkungsweise der erfindungsgemäßen Vorrichtung ist nachfolgend anhand der Figur 4 beschrieben.

Bei Zuführung des Druckmittels zum Zylinder 1 durch die Leitung 7 bewegt sich der Kolben 2 in Richtung des Pfeils A. Infolge der trapezoidartigen Verbindung der Hebelpaare 3, 3' und 4, 4' mittels der verschieden langen Verbindungsglieder 5, 5' und 6, 6' ist eine Parallelverschiebung der Hebel 4, 4' zu den Hebeln 3, 3' verunmöglicht. Die Hebel 3, 3' und 4, 4' werden vielmehr sukzessive angehoben und gleichzeitig scherenartig geöffnet. Die Verbindungsglieder 5, 5', welche langsam in Richtung des Pfeils B geschwenkt werden, sind dabei auf Zug beansprucht, während die in Richtung des Pfeils C geschwenkten Verbindungsglieder 6, 6' in der unteren Hubphase (Stellung I) unter Druckbelastung stehen. Sobald die scherenartige Öffnung der Hebelpaare 3, 3' und 4, 4' zur Hälfte erfolgt ist, stehen die Glieder 6, 6' nicht mehr unter Druckbelastung und haben hier nur Führungsfunktion; in der oberen Hubphase (Stellung III, IV) stehen sie ebenfalls unter Zugbelastung.

Die Verbindungsglieder 5, 5' stehen auch in der oberen Hubphase unter Zugbeanspruchung, werden hier jedoch infolge der beschränkten Länge der Verbindungsglieder 6, 6' zu einer beschleunigten Schwenkbewegung in Richtung des Pfeils B gezwungen. Damit wird die scherenartige Öffnungsbewegung der Hebel 4, 4' im Verhältnis zum Ausstoß des Kolbens 2 beschleunigt, bis in der Endlage der Öffnungswinkel der Hebelpaare 3, 3' und 4, 4' annähernd 180° beträgt, ohne daß dabei eine Totlage des Kolbens 2 in bezug auf die Gelenkverbindung der Hebelpaare erreicht wird. Dies hat den Vorteil, daß in der oberen Hubphase, wo infolge ungünstiger Verschiebung der Ladung auf der Ladebrücke plötzlich eine große Gegenlast (Zuglast) auftreten kann, die Ladebrücke in jeder Position festgehalten oder durch Zuführung des Druckmittels durch die Leitung 8 zurückgezogen werden kann. Beim Zurückziehen der Ladebrücke unter Gegenlast verläuft die Kräfteverteilung umgekehrt wie beim Hubvorgang, das heißt die Verbindungsglieder 5, 5' werden auf Druck und die Verbindungsglieder 6, 6' auf Zug beansprucht.

Die erfindungsgemäße Vorrichtung ermöglicht das für das Anheben der Last notwendige Öffnen der scherenartigen Hebelpaare ohne große Druckspitzen der Zylinder-Kolben-Einheit.

Die nachfolgende Tabelle zeigt für zwölf verschiedene Hubstellungen bei Hubabständen der Zylinder-Kolben-Einheit von jeweils 5 cm während des Anhebens und Absenkens einer Ladebrücke das Verhältnis ds Hubes der Zylinder-Kolben-Einheit zum Hub der scherenartigen Hebelpaare sowie die Hubkraft und Rückzugkraft der scherenartigen Hebelpaare. Diese Werte wurden an einem Modell für eine Vorrichtung gemäß den Figuren 1 und 2 mit einer doppelt wirkenden Zylinder-Kolben-Einheit mit einer Hubkraft von 80 t und einer Rückzugskraft von 60 t ermittelt.

0 006 871

| Hubstellung in cm | Hubverhältnis | Hubkraft in t | Rückzugkraft in t |
|---|---|---|---|
| 12,8 cm | 1 : 2.56 | 31.250 | 23.430 |
| 27,2 cm | 1 : 2.88 | 27.770 | 20.820 |
| 42,4 cm | 1 : 3.04 | 26.315 | 19.710 |
| 58,7 cm | 1 : 3.26 | 24.540 | 18.400 |
| 75,6 cm | 1 : 3.39 | 23.600 | 18.000 |
| 93,3 cm | 1 : 3.54 | 22.600 | 17.000 |
| 111,1 cm | 1 : 3.55 | 22.540 | 16.900 |
| 129,0 cm | 1 : 3.58 | 22.350 | 16.750 |
| 146,3 cm | 1 : 3.46 | 23.120 | 17.400 |
| 163,1 cm | 1 : 3.36 | 23.800 | 17.850 |
| 179,2 cm | 1 : 3.23 | 24.760 | 18.570 |
| 191,6 cm | 1 : 3.95 | 25.800 | 19.350 |

Die Tabelle zeigt einen gleichmäßigen Verlauf der Hub- und Rückzugkraft der scherenartigen Hebelpaare, wobei die größte Hubkraft zu Beginn des Hebevorganges zur Verfügung steht, womit die Ladebrücke leicht aus ihren Auflagen gehoben werden kann. Ferner ist im ganzen Hubbereich, vor allem aber in dessen oberstem Bereich eine Rückzugkraft vorhanden, die es erlaubt, bei Überkippungsgefahr der Ladebrücke dieselbe in jeder Position festzuhalten oder zurückzuziehen und den Kippwinkel zu verringern.

Durch die mit der erfindungsgemäßen Vorrichtung erzielbare rationelle Ausnützung der benötigten Kräfte wird eine Verminderung des Druckmittelvolumens und damit eine wesentliche Gewichtsersparnis erzielt. Ferner läßt sich die erfindungsgemäße Hebevorrichtung auf gedrängtesten Raum zusammenlegen, so daß sie ohne weiteres in solchen Lastwagen untergebracht werden kann, die nicht von Anfang an dafür vorgesehen waren, respektive bei neuen Kippaufbauten auf Lastwagen, die Ladebrücke niedrig gehalten werden kann.

Wenn auch im vorstehenden von einer Hebevorrichtung für Ladeflächen von Lastkraftwagen (Kippern) die Rede ist, so soll damit keineswegs zum Ausdruck kommen, daß sich diese Hebevorrichtung nur hierfür eignet. Vielmehr läßt sie sich überall anwenden, wo eine Ladefläche in eine Kippstellung gebracht werden soll, z. B. bei Kippanhängern, Sattelaufliegern sowie bei ortsfesten Laderampen oder dergleichen.


**Patentansprüche**

1. Hebe- und Senkvorrichtung zum Kippen einer Ladefläche, insbesondere für Lastkraftwagen und Anhänger, mit einer hydraulischen Zylinder-(1)-Kolben-(2)-Einheit und zwei vom Zylinder (1) betätigbaren und scherenartig damit verbundenen Hebelpaaren (3, 3' und 4, 4'), von denen das erste (4, 4') zweiarmig ausgebildet ist, wobei die freien Enden des zweiten Hebelpaares (3, 3') mit einem Chassis und die freien Enden des ersten Hebelpaares (4, 4') mit der kippbaren Ladefläche schwenkbar verbunden sind, während das eine Ende der Zylinder-(1)-Kolben-(2)-Einheit an einer zwischen den beiden Armen des ersten Hebelpaares (4, 4') befindlichen Achse (11) angelenkt ist und die entgegengesetzten Enden des mit seinem freien Ende mit dem Chassis verbundenen zweiten Hebelpaares (3, 3') abgewinkelt sind, um abgewinkelte Abschnitte (a) an jedem Ende von Achsen (9, 9') zu bilden; während die den abgewinkelten Abschnitten (a) des zweiten Hebelpaares (3, 3') gegenüberliegenden Arme (b) des ersten Hebelpaares (4, 4') je von einer Achse (10, 10') durchsetzt sind, von denen sich die eine (10) an den Hebelenden des ersten Hebelpaares (4, 4') befindet, während die direkt verbundenen Achsen (9, 10 und 9', 10') an unterschiedlichen Hebelpaaren (3,3' und 4, 4') über Verbindungsglieder (5, 5' und 6, 6') gelenkig und schwenkbar verbunden sind und die die Enden der Achsen (9, 10) verbindenden Glieder (5, 5') kürzer sind, als die anderen, die Achsen (9', 10') im Inneren der Hebelpaare verbindenden Glieder (6, 6'), dadurch gekennzeichnet, daß der Abstand zwischen den

4

in dem ersten Hebelpaar (4, 4') angeordneten Achsen (10, 10') größer als der Abstand zwischen den in den abgewinkelten Abschnitten (a) des zweiten Hebelpaares (3, 3') angeodneten Achsen (9, 9') ist und daß die Verbindungsglieder (5, 5' und 6, 6') der beiden Hebelpaare (3, 3' und 4, 4') aus steifen Elementen bestehen.

2. Vorrichtung nach Anspruch 1, dadurch gekennzeichnet, daß das Verhältnis der Länge der kürzeren Verbindungsglieder (5, 5') zur Länge der längeren Verbindungsglieder (6, 6') mindestens 1 : 2 beträgt.

3. Vorrichtung nach Anspruch 1 oder 2, dadurch gekennzeichnet, daß der Abstand der Achsen (9, 9') in den abgewinkelten Abschnitten (a) des zweiten Hebelpaares (3, 3') wenigstens annähernd der Länge der kürzeren Verbindungsglieder (5, 5') und der Abstand der Achsen (10, 10') in den Armen (b) des ersten Hebelpaares (4, 4') wenigstens annähernd der Länge der längeren Verbindungsglieder (6, 6') entspricht.

4. Vorrichtung nach einem der Ansprüche 1 bis 3, dadurch gekennzeichnet, daß die Anlenkachse (11) des einen Endes der Zylinder-Kolben-Einheit (2') mit der Anlenkachse (10') der längeren Verbindungsglieder (6, 6') im zweiarmigen Hebelpaar (4, 4') identisch ist.

5. Vorrichtung nach einem der Ansprüche 1 bis 4, dadurch gekennzeichnet, daß die Zylinder-Kolben-Einheit doppelt wirkend ist.

## Claims

1. A lifting and lowering device for tilting a loading platform, particularly suitable for trucks and their trailers, comprising a hydraulic cylinder (1)-piston (2) unit and two pairs of levers (3, 3' and 4, 4'), of which a first pair (4, 4'), of the double arm type, are operable by means of said cylinder (1) and are scissor-connected thereto, the free ends of the second pair of levers (3, 3') being connected to a frame and the free ends of the first pair of levers (4, 4') being connected to the tiltable loading surface, in both cases the connections being of the floating positionable type, one of the ends of the cylinder (1)-piston (2) unit being pivoted on an axle (11) located between the two arms of the first pair of levers (4, 4'), those ends of the second pair of levers (3, 3') distant from those connected to the frame being inclined at an angle in order to form bent sectors (a) located at each end of the axles (9, 9'); the arms (b), disposed in front of the inclined sectors (a) of the second pair of levers (3, 3'), and forming part of the first pair of levers (4, 4'), each being traversed by an axle (10, 10'), of which one (10) is disposed at the ends of the levers of the first pair of levers (4, 4'), the two directly coupled axles (9, 10 and 9', 10') being connected in a floating and positionable manner to different pairs of levers (3, 3' and 4, 4') by means of connection elements (5, 5' and 5, 5'), and the elements (5, 5') which connect together the end axles (9, 10) being shorter than the other elements (6, 6') which connect together the axles (9', 10') within the pairs of levers, characterised in that the distance between the axles (10, 10') disposed in the first pair of levers (4, 4') is greater than the distance between the axles (9, 9') disposed in the inclined sectors (a) of the second pair of levers (3, 3'); both the coupling elements (5, 5' and 6, 6') of the two pairs of levers (3, 3' and 4, 4') being constituted by rigid elements.

2. A device as claimed in claim I, characterised in that the ratio of the lenght of the short connection elements (5, 5') to the length of the longer connection elements (6, 6') is less than 1 : 2.

3. A device as claimed in claim 1 or 2, characterised in that the distance between the axles (9, 9') in the inclined sectors (a) of the second pair of levers (3, 3') corresponds approximately to the length of the shorter connection elements (5, 5'), and the distance between the axles (10, 10') in the arms (b) of the first pair of levers (4, 4') corresponds approximately to the length of the longer connection elements (6, 6').

4. A device as claimed in one of claims 1 to 3, characterised in that the axis of rotation (11) of one end of the cylinder-piston unit (2') coincides with the axis of rotation (10') of the longer connection elements (6, 6') of the pair of double arm levers (4, 4').

5. A device as claimed in one of claims 1 to 4, characterised in that the cylinder-piston unit is of the double acting type.

## Revendications

1. Dispositif de levage et d'abaissement pour faire basculer une plateforme de chargement, notamment pour camions et remorques, comprenant un vérin hydraulique composé d'un cylindre (1) et d'un piston (2) et deux paires de leviers (3, 3' et 4, 4') actionnée par le cylindre (1) et reliées avec lui en ciseaux, dans lesquelles la première paire (4, 4') est une paire de leviers à deux bras, les extrémités libres de la deuxième paire de leviers (3, 3') étant reliées à un châssis et les extrémités libres de la première pire de leviers (4, 4') étant articulées avec la plateforme de chargement basculable, tandis que l'une des extrémités du vérin (1, 2) est articulée sur un axe (11) qui se trouve entre les deux bras de la première paire de leviers (4, 4') et que les extrémités oppesées de la deuxième paire des leviers (3, 3') reliés par leur extrémité libre au châssis sont coudées afin de présenter des parties coudées (a) munies à chaque extrémité d'axes (9, 9') cependant que les bras (b) de la première paire de leviers (4, 4') situés en face des parties (a) coudées de la deuxième paire de leviers (3, 3') sont traversés par deux axes (10, 10') dont l'un (10) se trouve aux extrémités des leviers (4, 4') de la première paire de leviers, les axes (9, 10 et 9', 10') servant à l'articulation de paires de leviers différentes (3, 3') et (4, 4') par l'intermédiaire d'éléments de liaison (5, 5' et 6, 6') et les éléments (5, 5') reliant les extrémités des axes (9, 10) étant plus courts que les autres éléments (6, 6') reliant les axes situés à l'intérieur des paires de leviers, caractérisé en ce que la distance entre les axes (10, 10') montés sur la première paire de leviers (4, 4') est plus grande que la distance entre les axes (9, 9') montés dans les parties coudées (a) de la deuxième paire de leviers (3, 3') et les éléments de liaison (5, 5' et 6. 6') des deux paires de leviers (3, 3' et 4, 4') sont des éléments rigides.

2. Dispositif selon la revendication 1, caractérisé en ce que le rapport entre la longuer des éléments de liaison les plus courts (5, 5') et la longueur des éléments de liaison les plus longs (6, 6') est au moins de 1 à 2.

3. Dispositif selon l'une quelconque des revendications 1, 2, caractérisé en ce que la distance entre les axes (9, 9') montés dans les parties coudées (a) de la deuxième paire de leviers (3, 3') est au oins approximativement égale à la longueur des éléments de liaison (5, 5') les plus courts et la distance entre les axes (10, 10') montés dans les bras (b) de la première paire de leviers (4, 4') est au moins approximativement égale à la longueur des éléments de liaison les plus longs (6, 6').

4. Dispositif selon l'une quelconque des revendications 1 à 3, caractérisé en ce que l'axe d'articulation (11) de l'une des extrémités du vérin hydraulique (2') est identique à i'axe d'articulation (10') des éléments de liaison les plus longs (6, 6') dans la paire de leviers à deux bras (4, 4').

5. Dispositif selon l'une quelconque des revendications 1 à 4, caractérisé en ce que le vérin hydraulique est un vérin à double effet.

Fig. 1

Fig. 3

## Fig. 2

Fig. 4

0 006 871